Europäisches Patentamt

European Patent Office

Office européen des brevets

(19)

(11) Publication number: **0 270 150**
**A1**

(12) **EUROPEAN PATENT APPLICATION**

(21) Application number: **87202102.7**

(22) Date of filing: **30.10.87**

(51) Int. Cl.⁴: **A01K 5/02 , A01K 39/01**

(30) Priority: **17.11.86 IT 2370286 U**

(43) Date of publication of application:
**08.06.88 Bulletin 88/23**

(84) Designated Contracting States:
**BE DE ES FR GB IT NL**

(71) Applicant: **Pirovano, Camillo**
**Localitá Cavigiolo**
**I-22052 Cernusco Lombardone (Como)(IT)**

(72) Inventor: **Pirovano, Camillo**
**Localitá Cavigiolo**
**I-22052 Cernusco Lombardone (Como)(IT)**

(74) Representative: **Faraggiana, Vittorio, Dr. Ing.**
**et al**
**Ingg. Guzzi e Ravizza S.r.l. Via Boccaccio, 24**
**I-20123 Milano(IT)**

(54) **Improved feeding pan or trough for animal breeding establishments.**

(57) A feeding pan or trough suitable for application to the tube of feedstuff dispensing system employing tube-enclosed conveyor elements (25, 26) where the feedstuff is dispensed into the underlying feeding pan or trough (10) through a relative opening (24) in the said tube (23) which is controlled by a gate valve (18, 22), wherein a seat for the said gate valve is formed in the body of the feeding pan or trough (10) and wherein, externally to the said seat, means for coupling to the said tube are provided.

Fig.1

## IMPROVED FEEDING PAN OR TROUGH FOR ANIMAL BREEDING ESTABLISHMENTS

The present invention relates to an improved feeding pan or trough adapted to be used in combination with animal feedstuff dispensing systems incorporating channel, or tube-enclosed, conveyor elements. There are known feeding pans or troughs consisting of a container for application to the tube of the dispensing line proximally to a controlled-discharge opening, such control being by means of a valve, through which the feedstuff is delivered by free gravity fall into the underlying feeding pan or trough.

The presence of a valve assembly, comprising for example a gate valve that controls the exit of feedstuff through the tube-opening, in general represents an impediment to the embodiment of a straightforward, economical and effective connection between the feeding pan or trough and the tube itself.

In addition, in the specific instance of a gate valve, the connection between feeding pan or trough and tube has to be embodied so that the moving part of the gate valve moves in its seat with minimum friction since otherwise, given the large number of feeding pans or troughs in a breeding establishment of the kind in question, it would be necessary to use very elevated power to effect the opening and closing of all the gate valves involved.

The overall object of the present invention is to embody a feeding pan or trough adapted to be connected to the animal feedstuff dispensing tube in a rapid and straightforward manner without the aid of a complex securing means and in such a manner that the valve-gate controlling the dispensing of the feedstuff through the tube opening can move to and fro with minimum friction.

According to the invention the said object is attained by embodying a feeding pan or trough adapted to be applied to the tube of an animal feedstuff dispensing system incorporating tube-enclosed conveyor elements, in which the feedstuff is dispensed into the underlying feeding pan or trough through a relative opening in the said tube which is controlled by a gate valve, wherein there is formed in the body of the feeding pan or trough a seat for the said gate valve and wherein means for coupling to the said tube are provided externally to the said seat.

The structural and functional characteristics of the invention and its advantages over the known art will become more apparent from an examination of the following description, referred to the appended drawings which show an example of a feeding pan or trough embodied according to the innovative principles of the invention.

In the drawings:

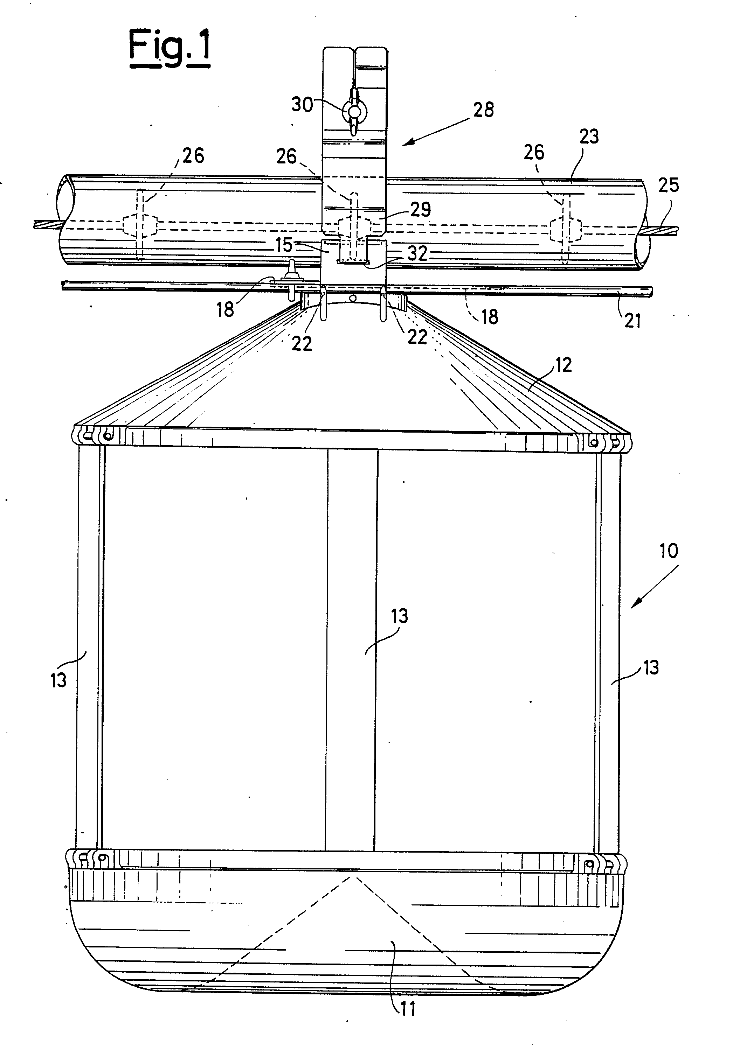

Figure 1 is an elevational view illustrating the said feeding pan or trough;

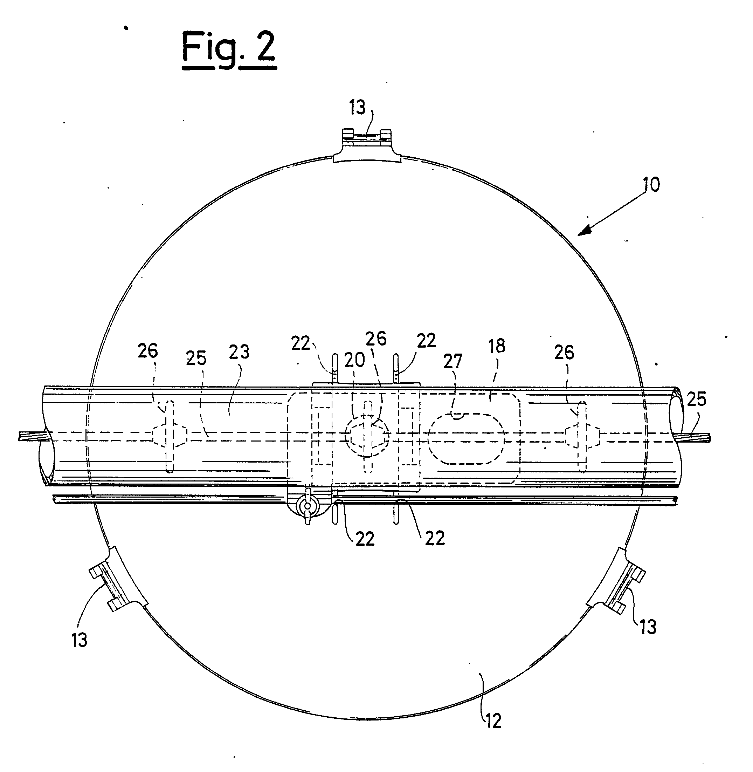

Figure 2 is a plan view of the feeding pan or trough in Figure 1;

Figure 3 and 4 are two enlarged particulars, in longitudinal and cross section respectively, illustrating the connection between feeding pan or trough an tube proximally to the gate valve; and

Figure 5 is an enlarged plan view illustrating in greater detail the seat formed on the feeding pan or trough, adapted to accept both the gate valve and the tube of the animal feedstuff dispensing line.

Referring to the drawings, the feeding pan or trough in question is indicated overall by 10 and consists structurally of a container 11 which is interconnected with a conical cover 12 through the intermediary of a series of circumferential vertical rods 13 applied in a freely removable manner.

The invention is also clearly applicable to feeding pans or troughs having an overall structure different from the one hitherto described by way of illustrative and not limiting example.

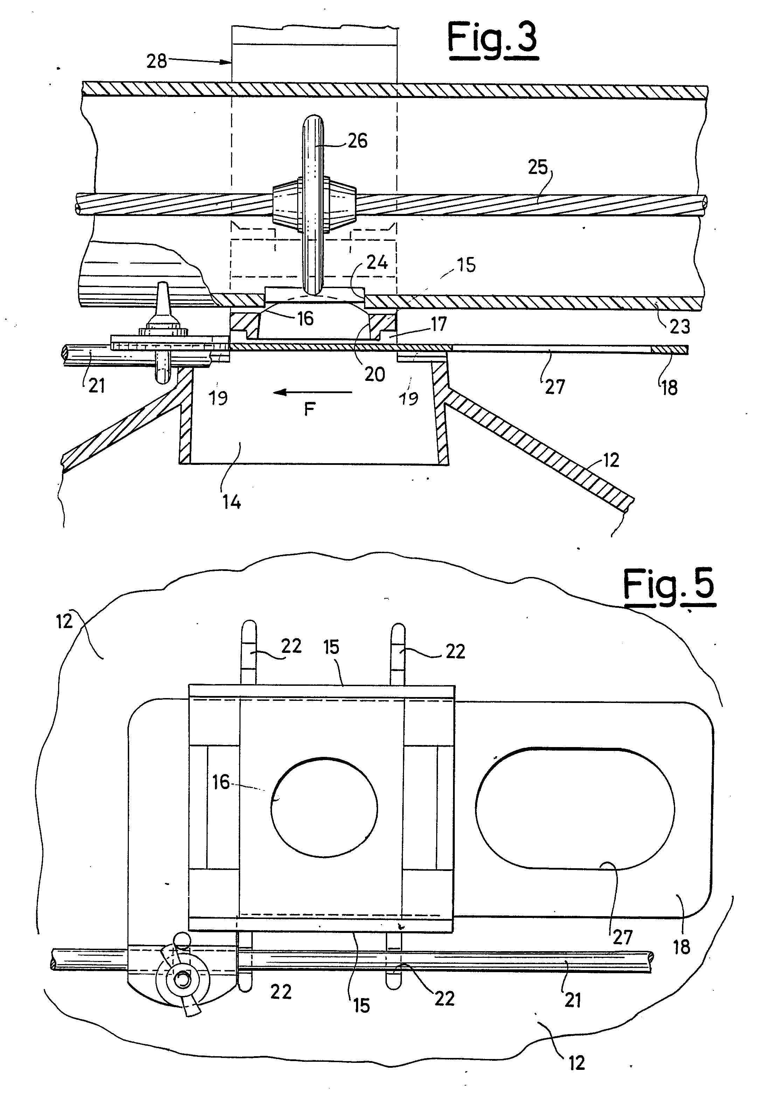

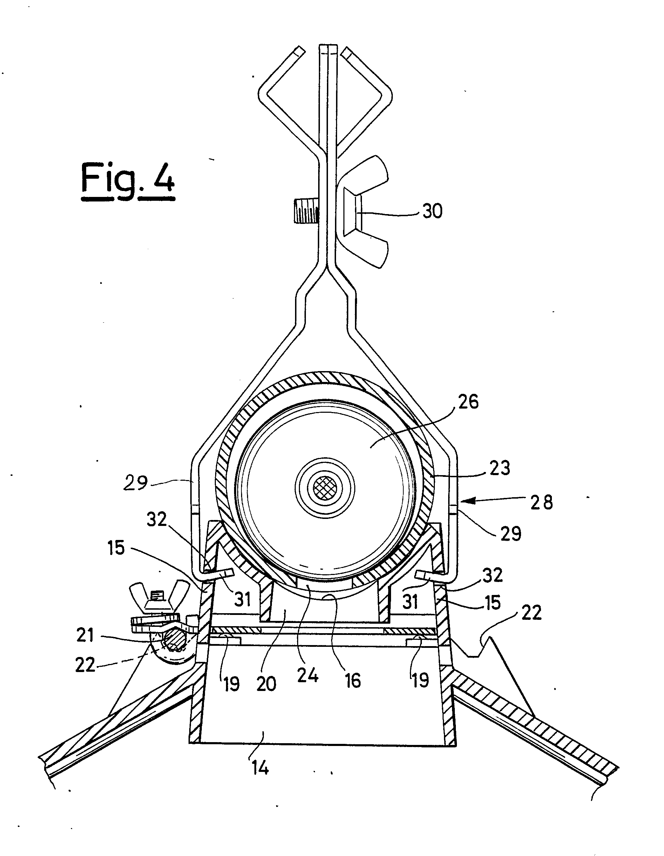

According to the invention, the top of the conical cover 12 is cut, and comprises a hollow-bodied seat 14, substantially parallelepiped, which projects partly internally and partly externally with respect to the said cover 12 ( Figures 3 and 4). In addition, from the external part of the said parallelepiped body 14 there extends a cradle portion 15, perforated at 16 and forming with the top of the said body 14 a through-slot 17 within which there is housed in a to-and-fro movable manner a gate 18 which controls the dispensing of the feedstuff to the feeding pan or trough.

In order to lessen the passive friction, the gate 18 rests on the raised portions 19 provided at the top of the body 14, and the bore 16 in the cradle 15 has an annular neck 20. The to-and-fro translation of the gate 18 is controlled in a known manner through the intermediary of remote control means (not shown) which are connected to the gates by means of a tie-rod 21. Characteristically the said tie-rod 21 is guided in its movement within one or other pair of lateral guides 22, provided externally on opposite sides the body 14.

The cradle 15 is adapted to couple with the lower half of a tube 23 proximally to a bore 24 which thus becomes aligned with the bore 16 and with the hollow parallelepiped body 14. The stable restraint between tube 23 and cradle 15 is effected through the intermediate of locking collet indicated overall by 28 and embodied in two part 29 interrconnected by means of a locking screw 30. As it is clearly shown in the attached drawings, the said locking collect 28 embraces the tube 23 and, with terminal teeth 31 of the said part 29, engages slots 32 of the portion 15.

By way of illustrative and not limitative example, there is controlled to move within the tube 23 a rope 25 bearing interspaced discs 26 which implement the conveyance of free-flowing animal feedstuff (not shown) along said tube 23.

With the gate 18 in the closed position shown in the attached drawings, the discharge of the material by free-fall into the feeding pan or trough is clearly impeded: such discharge will on the other hand be enabled by translation of the gate 18 in the direction indicated by the arrow F in Figure 3 to the point where the opening 27 is brought into the alignment with the openings 24 and 16.

There is in this way embodied a feeding pan or trough extremely straightforward as to construction, economical and operationally dependable, able to be coupled without particular difficulties to the tube of an animal feedstuff dispensing system comprising channel, or tube-enclosed, moving feedstuff conveying elements of the type wherein the dispensing of the feedstuff into the feeding pan is controlled by means of a gate valve.

The cover 12 in conjuction with the parallelepiped body 14, the cradle 15 and the lateral guides 22, can be embodied enbloc in a piece of plastic material.

The object specified in the introductory part of the specification is in the above manner attained.


## Claims

1. Feeding pan or trough suitable for application to the tube of feedstuff dispensing system employing tube-enclosed conveyor elements where the feedstuff is dispensed into the underlying feeding pan or trough through a relative opening in the said tube which is controlled by a gate valve, wherein a seat for the said gate valve is formed in the body of the feeding pan or trough and wherein, externally to the said seat, means for coupling to the said tube are provided.

2. Feeding pan or trough as described in claim 1, wherein the said body of the pan or trough comprises a conical cover the top of which is cut from the said seat which is parallelepiped and partially projecting outside and partially projecting inside the said cover, there extending from the outside-projecting part of the said seat a raised portion which forms, together with the top of the seat, a slot within which the said gate valve can slide, and externally a cradle portion adapted to be coupled with the said tube through the intermediary of the said coupling means;

3. Feeding pan or trough as described in claim 2, wherein the lower part of the said gate valve rests on raised portions formed at the top of the said parallelepiped seat, while provision is made in its upper part for an annular collet projecting from the said cradle in alignment with a bore in the said tube.

4. Feeding pan or trough as described in claim 2, wherein proximally to two opposite external sides of the said parallelepiped seat guides are provided within which a control rod for the said gate valve slides.

5. Feeding pan or trough as described in claim 2, wherein the said coupling means consist of a two-part collet the parts of which are interconnected by means of a locking screw, the said collet embracing the said tube and engaging, through the intermediary of terminal teeth on each of the said two parts, slots corresponding to the said raised portion.

# Fig.1

# Fig. 2

## Fig.3

## Fig.5

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 177 083  (PIROVANO) <br> * claims, figures * <br> ----- | 1 | A 01 K   5/02 <br> A 01 K  39/01 |

TECHNICAL FIELDS
SEARCHED (Int. Cl.4)

A 01 K   5/00
A 01 K  39/00

The present search report has been drawn up for all claims

| Place of search | Date of completion of the search | Examiner |
|---|---|---|
| BERLIN | 10-02-1988 | WUNDERLICH J E |

EPO FORM 1503 03.82 (P0401)